# EUROPEAN PATENT SPECIFICATION

(11) **EP 3 164 460 B1**
(45) Date of publication and mention of the grant of the patent: **11.03.2020**
(21) Application number: 14748329.1
(22) Date of filing: 01.07.2014
(51) Int. Cl.: C09K 3/14

(54) **GLASS COATED CBN ABRASIVES AND METHOD OF MAKING THEM**
GLASBESCHICHTETE CBN-SCHLEIFMITTEL UND VERFAHREN ZUR HERSTELLUNG DAVON
ABRASIFS EN CBN REVÊTUS DE VERRE, ET PROCÉDÉ POUR LEUR FABRICATION

(43) Date of publication of application: 10.05.2017
(73) Proprietor: Diamond Innovations, Inc., Worthington, OH 43085 (US)
(72) Inventor: ZHANG, Kai, Westerville, Ohio 43081 (US)
(74) Representative: Neilson, Martin Mark
(86) International application number: PCT/US2014/044995
(87) International publication number: WO 2016/003439

(56) References cited:
- WO-A1-2007/088461
- US-A- 2 527 044
- US-A- 5 125 933

## Description

### TECHNICAL FIELD AND INDUSTRIAL APPLICABILITY

The present disclosure relates to coated superabrasive abrasive particles and its method of manufacturing them, more specifically, to the glass coated cubic boron nitride (cBN) particles and the method of making them.

Vitreous bond (vit-bond) grinding wheels made with cubic boron nitride (cBN) superabrasive materials are commonly used for grinding applications. Due to the nature of the CBN having hardness next to diamond, the grinding wheel made with CBN abrasives can be applied to grind ferrous and non-ferrous steels and super-alloys and possesses low wheel wear, high grinding ratio and good surface finish. CBN abrasives make it possible in grinding industry to shorten the grinding cycle time and improve the productivity through an accelerated grinding. However, the surface of the work piece ground may be caused with a higher roughness if it is ground at accelerated grinding condition which likely makes CBN abrasives pull out. Therefore, enhancement of the crystal retention in the grinding wheel bond is critical to the performance.

As a result, it can be seen that there is a need for a grinding tool made from superabrasive composite material to be used in a tough demanding operation, such as accelerated grinding condition.

From US5,125,933A there is known a method as defined in the preamble of claim 1 and a material as defined in the preamble of claim 9.

### SUMMARY

In one embodiment, a method of making coated superabrasive material is defined by claim 1.

In another embodiment, a coated superabrasive material is defined by claim 9.

### BRIEF DESCRIPTION OF THE DRAWINGS

The foregoing summary, as well as the following detailed description of the embodiments, will be better understood when read in conjunction with the appended drawings. It should be understood that the embodiments depicted are not limited to the precise arrangements and instrumentalities shown.
FIG. 1 is a schematic view of a core structure with a coating according to an embodiment;
FIG. 2 is a perspective view of optical image of glass coated superabrasive materials according to an embodiment;
FIG. 3 is a flow diagram illustrating a method of making coated superabrasive materials according to an embodiment;
FIG. 4 is a graph illustrating grinding ratio of wheels made of standard cBN VBR and glass coated cBN VBR in 5150 steel application according to an embodiment; and
FIG. 5 is a graph illustrating grinding ratio of wheels made of standard cBN VBR and glass coated cBN VBR in M2 steel application according to an embodiment.

### DETAILED DESCRIPTION

An embodiment may provide superabrasive particles with coating outside the superabrasive particles. The coated structure may possess a high grinding ratio while maintaining competitive grinding power consumption during vitreous-bond steel grinding. The coated superabrasive particles, such as cBN or diamond particles, for example, may have a core and a coating outside the core. The superabrasive particles may be grown under high pressure and high temperature.

Cubic boron nitride (cBN) particles are known to be produced from hexagonal boron nitride catalyst systems, such as alkali and alkaline earth metal nitrides, under high pressure and high temperature for a time period sufficient to form the cubic structure. The reaction mass is maintained under pressure and temperature conditions that thermodynamically favor the formation of cubic boron nitride crystal. The cubic boron nitride is then recovered from the reaction mass using a combination of water, acidic solutions or caustic chemicals using recovery methods known in the art. It should be noted that other methods of producing cubic boron nitride are known, i.e., cubic boron nitride prepared via a temperature gradient method or a shock wave method, and modification of the process taught in the instant application may be used to produce the abrasive grains having unique features.

Any combination of starting ingredients, which provide both the hexagonal boron nitride and the catalyst may be employed. An embodiment of the starting reaction mixture may contain a source of boron, a source of nitrogen, and a source of catalyst metal. The source of the boron may be elemental boron, hexagonal boron nitride, or material such as one of the boron hydrides which may decompose to elemental boron under conditions of the reaction. The source of nitrogen may be either hexagonal boron nitride, or a nitrogen-containing compound of a catalyst metal which may provide a source of nitrogen under reaction conditions. The catalyst metal may be employed as the elemental metal or a catalyst compound which may decompose to the catalyst metal or to the catalyst metal nitride under reaction conditions.

The process may be carried out in any type of apparatus capable of producing the pressures and temperatures used to manufacture the superabrasive. An apparatus that may be used is described in U.S. Patent Nos. 2,941,241 and 2,941,248. Examples of other apparatus include belt presses, cubic presses and split-sphere presses.

The apparatus includes a reaction volume in which controllable temperatures and pressures are provided and maintained for desired periods of time. The apparatus disclosed in the aforementioned patents is a high pressure device for insertion between the platens of a hydraulic press. The high pressure device consists of an annular member defining a substantially cylindrical reaction area, and two conical, piston-type members or punches designed to fit into the substantially cylindrical reaction area, and two conical, piston-type members or punches designed to fit into the substantially cylindrical portion of the annular member from either side of the annular member. A reaction vessel which fits into the annular member may be compressed by the two piston members or six piston members to reach the desired pressures in the manufacturing the grains having unique features. The temperature necessary is obtained by a suitable means, such as, by induction heating, direct or indirect resistive heating or other methods.

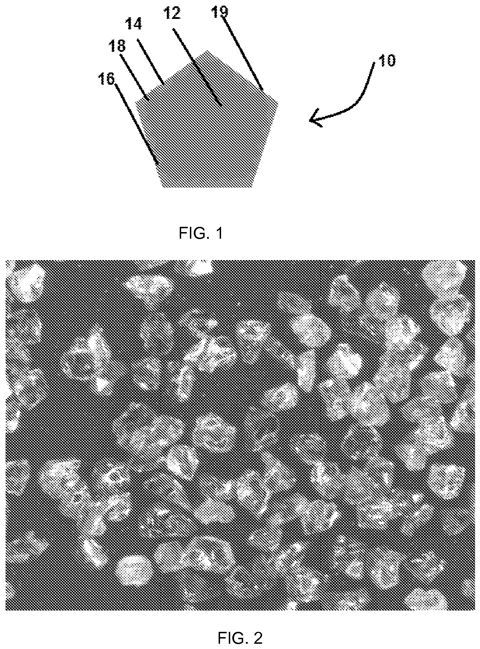

As shown in FIG. 1, a coated superabrasive material 10 may comprise a core 12 and a glass coating 14. The core 12 may have a superabrasive crystal structure. The superabrasive crystal may be selected from a group consisting of cubic boron nitride, diamond and diamond composite materials. The superabrasive crystal may have sizes from about 100 microns to about 200 microns, for example. The glass coating 14 may evenly cover outside the core 12. The glass coating 14 may range from about 1 wt% to about 15 wt% of the superabrasive crystal. In addition, the glass coating 14 may have a thickness ranging from about 1 micron to about 2 microns, for example.

The superabrasive crystal may have smooth surface in one embodiment. In another embodiment, the superabrasive crystal may have uneven surfaces 16. The uneven surface 16 may have spikes 19 or pits 16 on the surfaces. The superabrasive crystal may have toughness index more than 85. Superabrasive material, such as cubic boron nitride (cBN), is often used in grinding hard ferrous alloy work pieces due to cBN's relatively non-reactivity with ferrous work pieces. Accordingly, cBN materials often are formed into grinding and machining tools. The toughness of the cBN crystals, as measured by a standard friability test, may be a factor in grinding performance. The friability test involves ball milling a quantity of product under controlled conditions and sieving the residue to measure the breakdown of the product. The toughness index (TI) is measured at room temperature. The thermal toughness index (TTI) is measured after the product has been fired at a high temperature. In many cases the tougher the crystal, the longer the life of the crystal in a grinding or machining tool and, therefore, the longer the life of the tool.

FIG. 2 shows a perspective view of optical image of glass coated superabrasive materials. The glittering, shining glass coating outside of the cubic boron nitride may be easily seen. The coefficient of thermal expansion (CTE) is close to that of cBN, which makes glass an ideal coating candidate to the cBN. Glass may have a better bonding to vitreous bond grinding wheel than cBN only. Therefore, by coating with glass, cBN have a better retention in the vit-bond wheel. Glass used here for coating, can be any kind of glass, which includes low temperature softening glass or high temperature softening glass. Glass may also include specialty glass, such as boron glass, lead glass, for example. The term "superabrasive," as used herein, refers to materials having a Knoop hardness greater than about 4000.

The core 12 may have a single crystal structure in one embodiment. In another embodiment, the core 12 may have multiple crystal structures. The single crystal structure or multi crystal structures of the core 12 may be substantially faceted. The term "facet", as used herein, refers to flat face on geometric shapes.

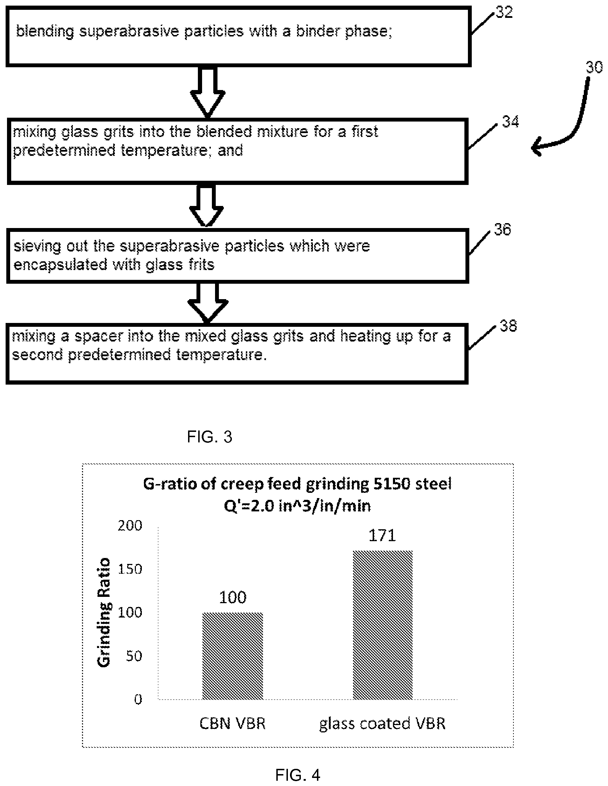

As shown in FIG. 3, a method 30 of making coated superabrasive materials according to one embodiment may include steps of blending superabrasive particles with a binder phase, such as water, ethylene glycol, sugar, polyethylene glycol, glue, in a step 32; mixing glass frits into the blended mixture for a first predetermined temperature, ranging from about 55 °C to 90 °C, in a step 34; sieving out the superabrasive particles which were encapsulated with glass frits in a step 36; mixing a spacer, which may be selected from a group consisting a metal, a metal alloy, or a metal oxide, into the mixed glass frits and heating up for a second predetermined temperature, ranging from about 600 °C to about 1100 °C, in a step 38. An embodiment may further include a step of vacuuming the mixture of the spacer, glass frits and cBN during heating up for the second predetermined temperature. Vacuuming the mixture may help to remove included bubbles because negative pressure may help to drive gas out of the coating layer. The amount of cBN verses the amount of the spacer, such as Al₂O₃ may be about 1: 3-5, so that there were enough spacers around cBN crystals.

Various methods of coating may be used for glass coating, such as chemical vapor deposition (CVD), physical vapor deposition (PVD), sol-gel or spray dry coating, or solid reaction coating, for example.

One or more steps may be inserted in between or substituted for each of the foregoing steps 32-38 without departing from the scope of this disclosure.

According to another embodiment, a method of making coated superabrasive material may comprise steps of blending glass frits with a plurality of wetted superabrasive particles; heating the blended mixture for a first predetermined temperature, ranging from about 55 °C to about 90 °C, for example; and mixing a spacer into the mixed glass frits and heating up for a second predetermined temperature, ranging from about 600 °C to about 1100 °C, for example. The method may further comprise sieving out glass coated superabrasive particles from the spacer since the spacer may have a size smaller than the superabrasive particles and sieving out the superabrasive particles which were encapsulated with glass frits. The spacer may be selected from a group consisting of a metal, a metal alloy, or a metal oxide. In one embodiment, the spacer may be aluminum oxide.

The superabrasive particles may be selected from a group consisting of cubic boron nitride, diamond and diamond composite materials. The superabrasive particles may be mixed with a binder phase, such as water, ethylene glycol, sugar, polyethylene glycol, glue, to form wetted superabrasive particles. The mixture of the superabrasive particles with the binder phase may be dried out before mixing with the spacer.

### Example 1

About 10 g of CBN 1000 80/100 mesh abrasives were weighed and poured into a 100ml beaker where about 5 ml Glycol solution was prepared. The mixture was sonicated for about 2 mins followed by stirring sufficiently with a stick to make sure that the CBN was wet by Glycol completely. The beaker was tilted and Glycol solution was poured from the beaker until no obvious Glycol was left. Ferro glass frits (90741F-softening temperature of 620 °C and about 10 - 20 micron particle size range) 10 grams were weighed and split into two equal portions. The first portion (5 grams) was poured into a plastic bottle (about 200 ml sized bottle) to cover the entire bottom of the bottle. Subsequently, Glycol wetted CBN crystals were spread into the bottle evenly. The mixture was slightly stirred for 3 seconds. The mixture was covered by the rest 5 grams glass frit.

About 5 grams plastic balls were disposed into the bottle. The balls were prepared in such a way that the ratio of the number of big balls (1/4" dia.) to the number of small balls (1/8") was 3:2. The bottle was set into the Turbula blender and the mixture was blended for 5 mins at 72 rpm, for example. The balls were manually sieved out by using about 1000 micron sieve screen. The blended mixture was collected using a metal pan and was put under a heating lamp for drying with a full power for a certain time (see Table 1, about 9 or 10 minutes would be the best condition.)

While being heated to dry, the mixture was stirred every one minute to ensure the entire mixture being exposed to the heat evenly. Then the separated and conglomerated glass frits were sieved out for 10 minutes. The sieve stack used in this experiment was 255um/151um/pan. If the mixture was sticky on the 255 micron screen, this meant that it was not dried sufficiently. In this case, the mixture was blended back and was dried under the heating lamp. After sieving, the crystals were collected on 151 micron screen and were bottled for next step process - vacuum firing. The coverage of glass frits were examined on the CBN crystals by using optical microscope. Each CBN crystal was encapsulated by the white glass frits completely.

An alternative method to remove glycol during above process steps was to pour crystals into a filtered beaker first and then evacuate the liquid glycol using vacuum pump for 1 or 2 seconds.

**Table 1**

| CBN crystal gram | Glycol removal method | Glass frits gram | plastic ball gram | Turbula blending time (min) | Dry time by heating lamp FULL POWE R (min) | Sieving time (min) | frit adhesion |
|---|---|---|---|---|---|---|---|
| 10 | decart | 10 | 5 | 5 | 6 | 10 | bad |
| 10 | decart | 10 | 5 | 5 | 8 | 10 | OK |
| 10 | decart | 10 | 5 | 5 | 10 | 10 | good |
| 10 | decart | 10 | 5 | 5 | 12 | 10 | OK |
| 10 | decart | 10 | 5 | 5 | 15 | 10 | less |
| 10 | vacuum suck | 10 | 5 | 5 | 6 | 10 | bad |
| 10 | vacuum suck | 10 | 5 | 5 | 8 | 10 | OK |
| 10 | vacuum suck | 10 | 5 | 5 | 10 | 10 | good |
| 10 | vacuum suck | 10 | 5 | 5 | 12 | 10 | less |
| 10 | vacuum suck | 10 | 5 | 5 | 15 | 10 | less |

### Example 2

600 grams of Al₂O₃ particles (140/170 mesh) were mixed with 100 grams of the frits/CBN particles in a stainless steel splitter. Usually the ratio for Al₂O₃ and cBN particles was kept as 6:1. The mixture was held using a ceramic crucible, which was transferred into a vacuum furnace where the vacuum was set at least 1x10⁻⁵ torr. As soon as the furnace vacuum reached 1x10⁻⁵ torr, the heat was turned on and was set up to 350 °C for 30 minutes. Then temperature was ramped up to 900 °C at which the dwell time was set to 60 minutes. After completing the heating cycle, the temperature was ramped down by 5 degrees per minute to ensure the quality of the glass coating on the CBN crystals. The crucible was taken out of the vacuum furnace as the temperature dropped down to 50 °C. The mixture was sieved carefully with 127 micron sieve screen to remove Al₂O₃ particles. A 107 micron sieve was used to hold the rest of remaining particles. The particles were rubbed through the sieve screen to let most of Al₂O₃ particles separate from CBN crystals and fall through the sieve. The rest was collected on 107micronsieve and was put onto a sieve stack 255/181/151/pan for sieving around 15 minutes. Those crystals were collected on the 151 mesh sieve and kept in a steel container.

Those on 255 micron and 181 micron sieves were combined and put into a plastic milling jar. Ceramic balls were added into the jar and a ratio of 250 grams of ball over 50 grams of CBN/Al₂O₃ was kept as 5:1. A turbula milling was used for 10 mins at 72 rpm. Lastly, the Al₂O₃ particles were sieved out of the mixture using a sieve stack of 700 micron (remove ceramic balls)/255um/181um/151um/pan. Those crystals were collected at both 181 microns and 151 microns and were put into the steel container.

### Experiment 3

Alcohol was added into the steel container and any residual Al₂O₃ debris were decanted out. This could be performed for 3 or 5 times so as to ensure that no white debris in the glass coated cBN particles could be observed. The glass coated cBN particles were heated for 10 mins under the heating lamp. This was the final glass coated cBN product.

### Experiment 4

### Grinding performance

To determine the performance of the glass coated CBN grains of the present invention in vitrified bond grinding systems, an experiment was implemented. In the experiment, two sets of grinding wheels were made by Wendt Dunnington using CBN VBR product (manufactured at Diamond Innovations, Worthington, Ohio) and a glass coated CBN VBR product described in the present invention. The condition of the wheels for both types of CBN grains were identical (see Table 2). The work pieces used for the grinding tests were M2 steel and 5150 steel, respectively. The grinding conditions are shown in Table 3.

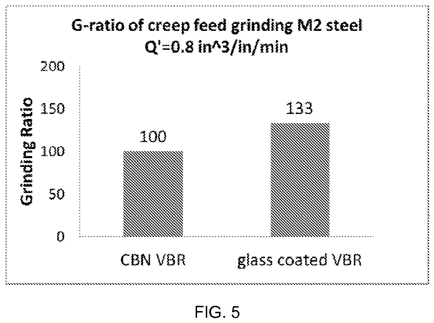

Grinding tests were conducted at AADC (American Application Development Center) for these two sets of wheels consecutively. Creep feed grinding procedures were used to monitor radial wheel wear, grinding power, and surface finish. Grinding ratio was determined as the volume of work piece materials grounded at the threshold of required surface finish divided by volume of wheel wear and shown in FIG. 4. For clarity, the grinding ratio of the CBN VBR was normalized to 100% in FIG. 4 and FIG. 5. It was observed that the grinding ratio of the wheels made by the glass coated CBN VBR grains was 71% higher than that of the standard CBN VBR wheel in 5150 steel application and 33% higher than of the standard CBN VBR wheel in M2 steel application, demonstrating improved grinding performance exhibited in the glass coated CBN VBR. grinding power was comparable for all tested wheels, the surface finishes were appreciably lower for the glass coated CBN VBR as compared to the standard CBN VBR grains. Lower finish indicates the existence of better crystal retention in the bond system as well.

**Table 2**

| **Grinding Wheel Specifications** | |
|---|---|
| Wheel Type | 1Al (ceramic core) |
| Wheel Diameter | 7.00" (178 mm) |
| Wheel Width | 0.250" (6.3 mm) |
| Abrasive Rim Depth | 0.120" (3.0 mm) |
| Mesh Size | 120/140 (B126) |
| Concentration | 150 |
| Wheel Manufacturer | Wendt Dunnington |
| Bond Type | Vitrified / M250-V250 |

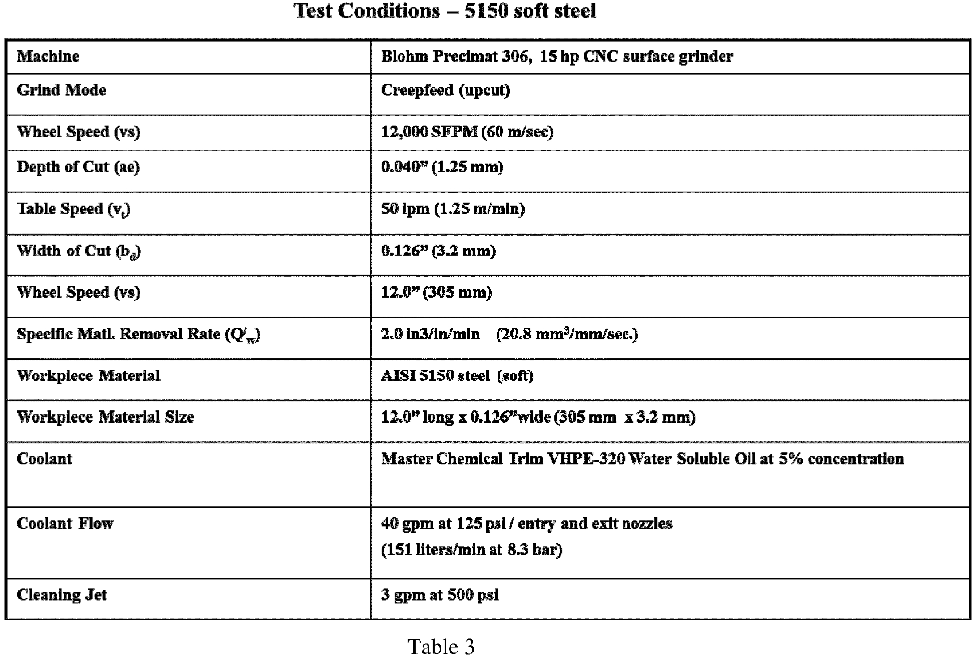

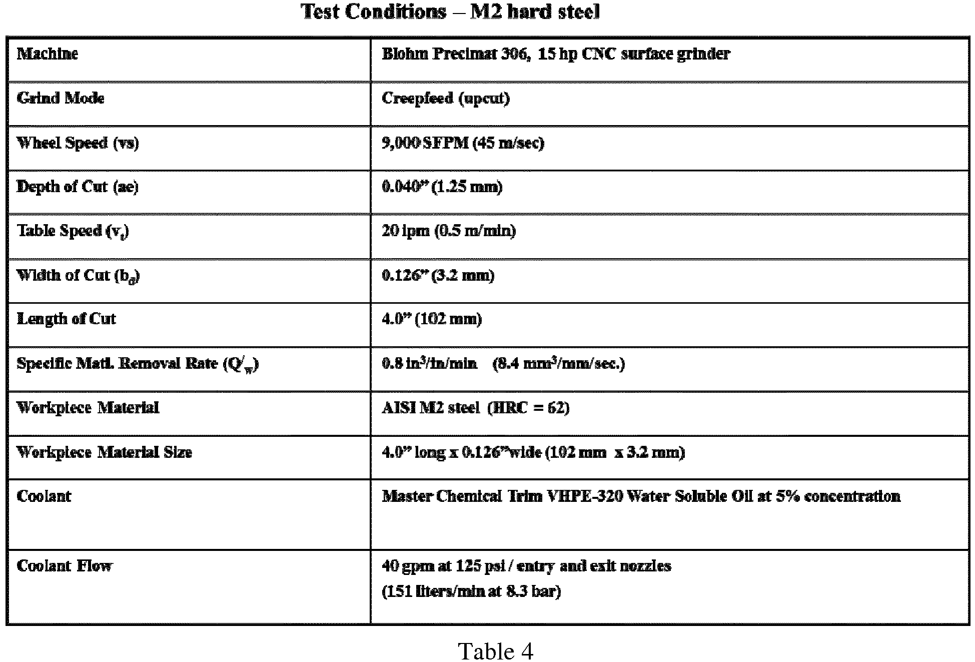

While reference has been made to specific embodiments, it is apparent that other embodiments and variations can be devised by others skilled in the art without departing from the scope of the claims.

## Claims

1. A method of making a coated superabrasive material (10), comprising:
blending superabrasive particles with a binder phase;
mixing glass frits into the blended mixture at a first predetermined temperature to obtain superabrasive particles encapsulated with glass fits;
sieving out the encapsulated superabrasive particles;
**characterised by**:
mixing a spacer with the encapsulated superabrasive particles and heating the spacer with the encapsulated superabrasive particles at a second predetermined temperature;
to provide glass coated superabrasive particles; and
separating the spacer from the glass coated superabrasive particles.

2. The method of claim 1, wherein the first predetermined temperature ranges from 55 °C to 90 °C.

3. The method of claim 1 or claim 2, wherein the second predetermined temperature ranges from 600 °C to 1100 °C.

4. The method of any one of claims 1 to 3, wherein the spacer is selected from a group consisting of a metal, a metal alloy, or a metal oxide.

5. The method of any one of claims 1 to 4, wherein the spacer has a size smaller than the superabrasive particles.

6. The method of any one of claims 1 to 4, wherein the spacer is aluminum oxide.

7. The method of any one of claims 1 to 6, wherein the binder phase is water.

8. The method of any one of claims 1 to 7, further comprising vacuuming the mixture of the spacer, glass frits and superabrasive particles during heating up for the second predetermined temperature.

9. A coated superabrasive material (10), comprising:
a core (12) comprising a superabrasive crystal; and
a glass coating (14) evenly covering an outside surface of the core (12);
**characterised in that**:
the glass coating (14) ranges from about 1 wt% to 15 wt% of the superabrasive crystal and has thickness ranging from 1 micron to 2 microns.

10. The coated superabrasive material of claim 9, wherein the superabrasive crystal has sizes ranging from 100 microns to 200 microns.

11. The coated superabrasive material of claim 9 or claim 10, wherein the superabrasive crystal is selected from a group consisting of cubic boron nitride, diamond and diamond composite materials.

12. The coated superabrasive material any one of claims 9 to 11, wherein the superabrasive crystal is cubic boron nitride.

13. The coated superabrasive material of any one of claims 9 to 12, wherein the superabrasive crystal has uneven surfaces (16).

14. The coated superabrasive material of claim any one of claims 9 to 13, wherein the superabrasive crystal has peaks or spikes (19) on surfaces.

15. The coated superabrasive material of claim any one of claims 9 to 14 wherein the superabrasive crystal has toughness index more than 85.

## Patentansprüche

1. Verfahren zur Herstellung eines beschichteten Superschleifmaterials (10), umfassend:
das Vermischen von Superschleifmittelteilchen mit einer Bindemittelphase;
das Einmischen von Glasfritte in das vermischte Gemisch bei einer ersten vorbestimmten Temperatur, um mit Glasfritte verkapselte Superschleifmittelteilchen zu erhalten;
das Heraussieben der verkapselten Superschleifmittelteilchen;
**gekennzeichnet durch**:
das Vermischen eines Spacers mit den verkapselten Superschleifmittelteilchen und das Erhitzen des Spacers mit den verkapselten Superschleifmittelteilchen bei einer zweiten vorbestimmten Temperatur;
um glasbeschichtete Superschleifmittelteilchen bereitzustellen; und
das Abtrennen des Spacers von den glasbeschichteten Superschleifmittelteilchen.

2. Verfahren nach Anspruch 1, wobei die erste vorbestimmte Temperatur im Bereich von 55°C bis 90°C liegt.

3. Verfahren nach Anspruch 1 oder 2, wobei die zweite vorbestimmte Temperatur im Bereich von 600°C bis 1100°C liegt.

4. Verfahren nach einem der Ansprüche 1 bis 3, wobei der Spacer ausgewählt ist aus einer Gruppe, bestehend aus einem Metall, einer Metalllegierung oder einem Metalloxid.

5. Verfahren nach einem der Ansprüche 1 bis 4, wobei der Spacer eine kleinere Größe als die Superschleifmittelteilchen aufweist.

6. Verfahren nach einem der Ansprüche 1 bis 4, wobei der Spacer Aluminiumoxid ist.

7. Verfahren nach einem der Ansprüche 1 bis 6, wobei die Bindemittelphase Wasser ist.

8. Verfahren nach einem der Ansprüche 1 bis 7, des Weiteren umfassend das Vakuumieren des Gemisches aus dem Spacer, der Glasfritte und den Superschleifmittelteilchen während des Erwärmens auf die zweite vorbestimmte Temperatur.

9. Beschichtetes Superschleifmaterial (10), umfassend:
einen Kern (12), umfassend einen Superschleifmittelkristall; und
eine Glasbeschichtung (14), die eine äußere Oberfläche des Kerns (12) gleichmäßig bedeckt;
**dadurch gekennzeichnet, dass**:
die Glasbeschichtung (14) im Bereich von 1 Gew.-% bis 15 Gew.-% des Superschleifmittelkristalls liegt und eine Dicke im Bereich von 1 Mikron bis 2 Mikron aufweist.

10. Beschichtetes Superschleifmaterial nach Anspruch 9, wobei der Superschleifmittelkristall im Bereich von 100 Mikron bis 200 Mikron liegt.

11. Beschichtetes Superschleifmaterial nach Anspruch 9 oder Anspruch 10, wobei der Superschleifmittelkristall ausgewählt ist aus einer Gruppe, bestehend aus kubischem Bornitrid, Diamant und Diamant-Verbundmaterialien.

12. Beschichtetes Superschleifmaterial nach einem der Ansprüche 9 bis 11, wobei der Superschleifmittelkristall kubisches Bornitrid ist.

13. Beschichtetes Superschleifmaterial nach einem der Ansprüche 9 bis 12, wobei der Superschleifmittelkristall eine unebene Oberfläche (16) aufweist.

14. Beschichtetes Superschleifmaterial nach einem der Ansprüche 9 bis 13, wobei der Superschleifmittelkristall Spitzen oder Dornen (19) an Oberflächen aufweist.

15. Beschichtetes Superschleifmaterial nach einem der Ansprüche 9 bis 14, wobei der Superschleifmittelkristall einen Zähigkeitsindex von mehr als 85 aufweist.

## Revendications

1. Procédé de fabrication d'un matériau superabrasif revêtu (10), comprenant les étapes consistant à :
mélanger des particules superabrasives avec une phase liante ;
malaxer des frittes de verre dans le mélange homogène à une première température prédéterminée pour obtenir des particules superabrasives encapsulées avec des frittes de verre ;
tamiser les particules superabrasives encapsulées ;
**caractérisé par** les étapes consistant à :
malaxer un élément d'espacement avec les particules superabrasives encapsulées et chauffer l'élément d'espacement avec les particules superabrasives encapsulées à une deuxième température prédéterminée ;
pour fournir des particules superabrasives revêtues de verre ; et
séparer l'élément d'espacement des particules superabrasives revêtues de verre.

2. Procédé de la revendication 1, dans lequel la première température prédéterminée se trouve dans la plage allant de 55°C à 90°C.

3. Procédé de la revendication 1 ou 2, dans lequel la deuxième température prédéterminée se trouve dans la plage allant de 600°C à 1100°C.

4. Procédé de l'une quelconque des revendications 1 à 3, dans lequel l'élément d'espacement est choisi dans un groupe consistant en un métal, un alliage métallique et un oxyde métallique.

5. Procédé de l'une quelconque des revendications 1 à 4, dans lequel l'élément d'espacement a une taille inférieure à celle des particules superabrasives.

6. Procédé de l'une quelconque des revendications 1 à 4, dans lequel l'élément d'espacement est l'oxyde d'aluminium.

7. Procédé de l'une quelconque des revendications 1 à 6, dans lequel la phase liante est l'eau.

8. Procédé de l'une quelconque des revendications 1 à 7, comprenant en outre l'étape consistant à mettre sous pression à vide le mélange de l'élément d'espacement, des frittes de verre et des particules superabrasives pendant le chauffage jusqu'à la deuxième température prédéterminée.

9. Matériau superabrasif revêtu (10), comprenant :
un noyau (12) comprenant un cristal superabrasif ; et
un revêtement de verre (14) couvrant uniformément une surface externe du noyau (12) ;
**caractérisé en ce que** :
le revêtement de verre (14) représente environ 1 % en poids à 15 % en poids du cristal superabrasif et a une épaisseur se trouvant dans la plage allant de 1 micron à 2 microns.

10. Matériau superabrasif revêtu de la revendication 9, dans lequel le cristal superabrasif a des tailles se trouvant dans la plage allant de 100 microns à 200 microns.

11. Matériau superabrasif revêtu de la revendication 9 ou 10, dans lequel le cristal superabrasif est choisi dans un groupe consistant en nitrure de bore cubique, diamant et matériaux composites de diamant.

12. Matériau superabrasif revêtu de l'une quelconque des revendications 9 à 11, dans lequel le cristal superabrasif est le nitrure de bore cubique.

13. Matériau superabrasif revêtu de l'une quelconque des revendications 9 à 12, dans lequel le cristal superabrasif a des surfaces inégales (16).

14. Matériau superabrasif revêtu de l'une quelconque des revendications 9 à 13, dans lequel le cristal superabrasif a des pics ou des pointes (19) sur les surfaces.

15. Matériau superabrasif revêtu de l'une quelconque des revendications 9 à 14, dans lequel le cristal superabrasif a un indice de ténacité supérieur à 85.
